# EUROPEAN PATENT SPECIFICATION

(11) **EP 3 424 345 B1**
(45) Date of publication and mention of the grant of the patent: **01.07.2020**
(21) Application number: 18182553.0
(22) Date of filing: 09.07.2018
(51) Int. Cl.: A23L 5/10, A23L 3/015, A23C 3/08, A23C 19/10, A23C 19/11, A23L 3/3463, A23B 4/22

(54) **HIGH HYDROSTATIC PRESSURE METHOD FOR PROCESSING FOOD PRODUCTS**
VERFAHREN MIT HOHEM HYDROSTATISCHEM DRUCK ZUR BEHANDLUNG VON NAHRUNGSMITTELPRODUKTEN
PROCÉDÉ DE PRESSION HYDROSTATIQUE ÉLEVÉE POUR TRAITER DES PRODUITS ALIMENTAIRES

(30) Priority: 07.07.2017 PT 2017110196; 24.08.2017 EP 17187849
(43) Date of publication of application: 09.01.2019
(73) Proprietor: Universidade Católica Portuguesa - UCP, 4169-005 Porto (PT)
(72) Inventor: MAIA TEIXEIRA, PAULA CRISTINA, 4202-401 PORTO (PT); NÓRTON, KOMORA DA SILVA, 4202-401 PORTO (PT); CLÁUDIA, MACIEL E SILVA, 4202-401 PORTO (PT); SÓNIA MARÍLIA, DE ALMEIDA E CASTRO, 4202-401 PORTO (PT); SARAIVA, JORGE MANUEL ALEXANDRE, 3810-193 AVEIRO (PT)
(74) Representative: Patentree

(56) References cited:
- EP-A1- 1 621 085
- WO-A1-99/67287
- WO-A1-2015/084938
- CN-A- 101 496 534
- US-A1- 2005 287 260
- LEVERENTZ B ET AL: "BIOCONTROL OF LISTERIA MONOCYTOGENES ON FRESH-CUT PRODUCE BY TREATMENT WITH LYTIC BACTERIOPHAGES AND A BACTERIOCIN", APPLIED AND ENVIRONMENTAL MICROBIOLOGY, AMERICAN SOCIETY FOR MICROBIOLOGY, US, vol. 69, no. 8, 2003, pages 4519-4526, XP001203576, ISSN: 0099-2240, DOI: 10.1128/AEM.69.8.4519-4526.2003
- G.A DYKES ET AL: "Combined antimicrobial effect of nisin and a listeriophage against Listeria monocytogenes in broth but not in buffer or on raw beef", INTERNATIONAL JOURNAL OF FOOD MICROBIOLOGY, vol. 73, no. 1, 2002, pages 71-81, XP055218865, NL ISSN: 0168-1605, DOI: 10.1016/S0168-1605(01)00710-3
- LEE D U ET AL: "EFFECTS OF COMBINATION TREATMENTS OF NISIN AND HIGH-INTENSITY ULTRASOUND WITH HIGH PRESSURE ON THE MICROBIAL INACTIVATION IN LIQUID WHOLE EGG", INNOVATIVE FOOD SCIENCE AND EMERGING TECHNOLO, ELSEVIER, AMSTERDAM, NL, vol. 4, no. 4, 2003, pages 387-393, XP008054174, ISSN: 1466-8564, DOI: 10.1016/S1466-8564(03)00039-0
- MARYORIS E SOTO LOPEZ ET AL: "Isolation and Characterization of Lytic Bacteriophages as an Alternative to Prevent Pseudomonas spp in Poultry Industry", MOJ FOOD PROCESSING & TECHNOLOGY, vol. 1, no. 3, 2 November 2015 (2015-11-02), XP055515720, DOI: 10.15406/mojfpt.2015.01.00018
- GARCIA P ET AL: "Food biopreservation: promising strategies using bacteriocins, bacteriophages and endolysins", TRENDS IN FOOD SCIENCE AND TECHNOLOGY, ELSEVIER SCIENCE PUBLISHERS, GB, vol. 21, no. 8, 2010, pages 373-382, XP027230480, ISSN: 0924-2244 [retrieved on 2010-05-20]
- BLACK E P ET AL: "The combined effect of high pressure and nisin on inactivation of microorganisms in milk", INNOVATIVE FOOD SCIENCE AND EMERGING TECHNOLOGIES, ELSEVIER, AMSTERDAM, NL, vol. 6, no. 3, 2005, pages 286-292, XP027837746, ISSN: 1466-8564 [retrieved on 2005-09-01]
- AHMADI H ET AL: "Biocontrol of Shigella flexneriin Ground Beef and Vibrio cholerae in Seafood with Bacteriophage-Assisted High Hydrostatic Pressure (HHP) Treatment", FOOD AND BIOPROCESS TECHNOLOGY ; AN INTERNATIONAL JOURNAL, SPRINGER-VERLAG, NEW YORK, vol. 8, no. 5, 24 January 2015 (2015-01-24), pages 1160-1167, XP035477537, ISSN: 1935-5130, DOI: 10.1007/S11947-015-1471-6 [retrieved on 2015-01-24]

## Description

### Technical field

The present disclosure relates to the field of high pressure processing of foods, in particular a method of pasteurization using high pressure in combination with a bacteriophage and a bacteriocin. The method of the present disclosure allows the pasteurization of the food product and avoid the regrow during the food product storage.

### Background

*Listeria monocytogenes* is a Gram-positive, facultatively anaerobic, psychotropic, non-endospore-forming bacillus belonging to the family *Listeriaceae.* It is a facultative intracellular pathogen that causes a rare, although severe foodborne disease named listeriosis. In recent years, listeriosis incidence has increased across Europe, being the leading cause of hospitalization or death, with a fatality rate of up to 30%, due to the consumption of contaminated food. In fact, *L. monocytogenes* can be ubiquitously found in soil, raw materials, food processing environments, as well as in a wide variety of foods; common foods associated with outbreaks of listeriosis are fermented meat sausages, charcuterie products and raw milk cheeses.

Multi-hurdle approach or the *hurdle technology* of *Leistner* designates a process of deliberately combined hurdles to achieve a microbiologically safe food product, preserving its nutritional and organoleptic properties; more than 60 potential hurdles for food processing have been described, with temperature, water activity (a_{w}), pH, redox potential and food chemical preservatives being the most commonly applied (Leistner and Gorris, 1995; Leistner, 2000). The main concept of *hurdle technology* is that a microorganism requires a certain amount of effort to overcome each hurdle; the higher the number of hurdles, the greater the number of cells needed to overcome them. A wise mix of hurdles should maintain the food safe due to the microorganism inability to circumvent the combined hurdles.

The *hurdle technology* has become an attractive strategy to attend the increasing demand of consumers for minimally processed, fresh, healthy and "green" label food products. In fact, the development of new applications of food biopreservation combining natural antimicrobial agents and high hydrostatic pressure (HHP) not only ensures food safety of products, but also importantly potentiates the implementation/ emergence of energy-sustainable and environment-friendly food decontamination technologies.

These facts are disclosed in order to illustrate the technical problem addressed by the present disclosure.

### General Description

More recently, the emergence of novel biocontrol approaches with the employment of natural antimicrobials such as bacteriocins, essential oils and bacteriophages introduced new variables for bacteriostatic and bactericidal effect in *hurdle technology* application (Hygreeva and Pandey, 2016). Combination of high pressure and nisin are described in Black et al. 2005 (The combined effect of high pressure and nisin on inactivation of microorganisms in milk, Innovative Food Science and Emerging Technologies 6, pages 286-292) and Lee et al. 2003 (Effects of combination treatments of nisin and high-intensity ultrasound with high pressure on the microbial inactivation in liquid whole egg, Innovative Food Science and Emerging Technologies 4, pages 387-393). With respect to the combination of mild HHP and bacteriophages (Ahmadi et al., 2015), scarce information is currently available and further studies are needed. Despite the promising results obtained by these combined hurdles in the inactivation of the target pathogens and, at the same time, in the preservation of endogenous microbiota and product's freshness, a noticeable bacteria regrowth has been observed during refrigerated storage of bio-treated foods, especially in studies targeting *L. monocytogenes* (Baños et al., 2016; Leverentz et al., 2003).

Due to the relevance of *L. monocytogenes* prevalence in food industry, the pathogen has been recently described as a target bacterium for the development of bacteriophage application towards biocontrol and food decontamination. The objective of the present disclosure was to evaluate the effect of multi-hurdle process which combines mild HHP, a bacteriophage, in particular phage Listex™ P100, and bacteriocin, in particular bacteriocin HA-6111-2 as a new non-thermal process for *L. monocytogenes* decontamination in two different food matrices, milk and fermented meat sausage.

Bacteriocins are proteinaceous compounds produced by bacteria to inhibit the growth of similar or closely related bacterial strain(s). They are similar to yeast and paramecium killing factors, and are structurally, functionally, and ecologically diverse.

A bacteriophage, or phage, is a virus that specifically infects and replicates within a specific target bacterium. Phages herein included are commercially lytic bacteriophages, disrupting bacterial metabolism and eventually causing lysis of the host bacterial cell.

A bacteriocinogenic lactic acid bacterium is defined as a Gram-positive, catalase and oxidase negative bacteria which produces lactic acid as the main metabolic end product of sugar fermentation and bacteriocins which are heat-stable ribosomally synthesized antimicrobial peptides with narrow or broad host ranges.

A plaque-forming unit (PFU) is a measure of the number of particles capable of forming plaques per unit volume.

The present invention relates to a method for processing a food product for inactivating bacteria associated to said product, preferably *L. monocytogenes,* comprising the steps as defined in the appended claims.

In an embodiment, the inactivated bacteria is selected from the genus: Listeria.

In an embodiment, the step of mixing the food product may be carried out by spraying, sprinkling, dipping, bathing, rinsing, injecting, spraying or mixing, a solution of the bacteriophage and the bacteriocin onto the food product.

In an embodiment, the bacteriophage may be selected from Listex™ P100, ListShield™. Listex™ P100 may be ordered from Micreos Food Safety (Netherlands) and ListShield™ may be ordered from Intralytix (USA).

In an embodiment, the concentration of bacteriocin, in particular the concentration of semi-purified bacteriocin extract, may range from 640 - 6400 AU/mL of food product or from 640 - 6400 AU/g of food product.

In an embodiment, the concentration of bacteriophage may range from 10⁸ - 10¹⁰ PFU/mL or from 10⁸ - 10¹⁰ PFU/g of food product.

In an embodiment, the ratio of bacteriophage: bacteriocin may be from 10⁸ PFU:640 AU -10¹⁰:6400 AU in 1 g of food product, in particular 1 g of solid food product. This ratio refers to the number of particles of the bacteriophage versus the number of particles of bacteriocin.

In an embodiment, the ratio of bacteriophage: bacteriocin may be from 10⁸ PFU:640 AU - 10¹⁰:6400 AU in 1 mL of food product, in particular 1 mL of liquid food product. This ratio refers to the number of particles of the bacteriophage versus the number of particles of bacteriocin.

In an embodiment, the bacteriocin is pediocin PA-1, commercially available from Sigma-Aldrich (USA).

The bacteria inactivated by the method now disclosed are bacteria selected from the genus: Listeria.

In an embodiment, the bacteria may be selected from the species: *Listeria* (L.) *monocytogenes, L. innocua,* or combinations thereof.

In an embodiment, the bacteria, in particular the pathogenic bacteria, may be selected from the strains: *L. innocua* ATCC 33090, *L. monocytogenes* NCTC 11994, *L. monocytogenes* ATCC 49594, *L. monocytogenes* ATCC 19112 and Scott A (CIP 103575 Pasteur Institute).

In an embodiment, the food product may be selected from: dairy product, meat product, poultry, fish product, seafood, a ready-to-eat meal, an egg, an egg-containing food, fruit derived product (pH ≥ 4.00), vegetable derived product (pH ≥ 4.00), grains, grain derived product, deli salad (pH ≥ 4.00), salad dressing, condiment, pasta, soup, aseptically packaged food, or combinations thereof, in particular the food product has a pH ≥ 4.00.

In an embodiment, the dairy product may be whole milk.

In an embodiment, the meat product may be fermented meat sausage.

The method is carried out for a period of time from 1 - 20 minutes, preferably from 2 -10 minutes, more preferably 5 - 8 minutes.

The method is carried out with a pressure from 100 - 300 MPa, preferably 200 - 300 MPa, more preferably 260-285 MPa or 280 - 295 MPa, even more preferably 280-285 MPa.

In an embodiment, the method is carried out with a temperature of 5 - 20 °C, preferably 8-15 °C, more preferably at 10 °C.

The invention also relates to the use of a bacteriophage and a bacteriocin composition, in food pasteurization, as a growth inhibitor of bacteria or as an inactivator of bacteria as defined in claim 11.

### Brief Description of the Drawings

The following figures provide preferred embodiments for illustrating the description and should not be seen as limiting the scope of present disclosure.

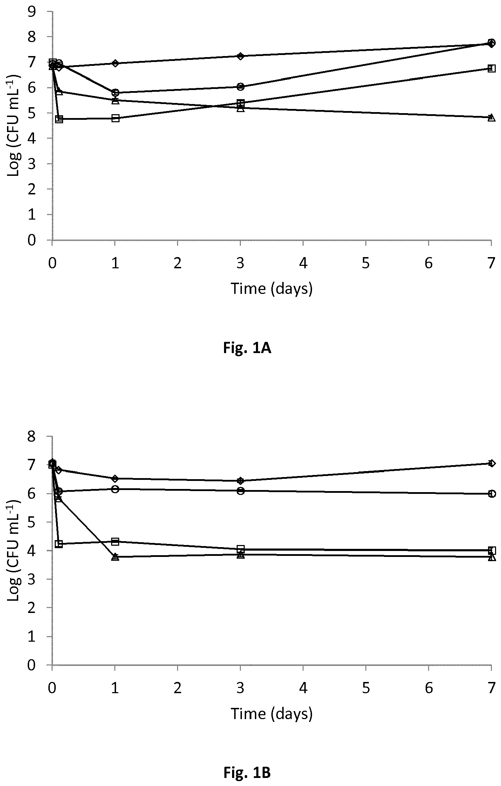

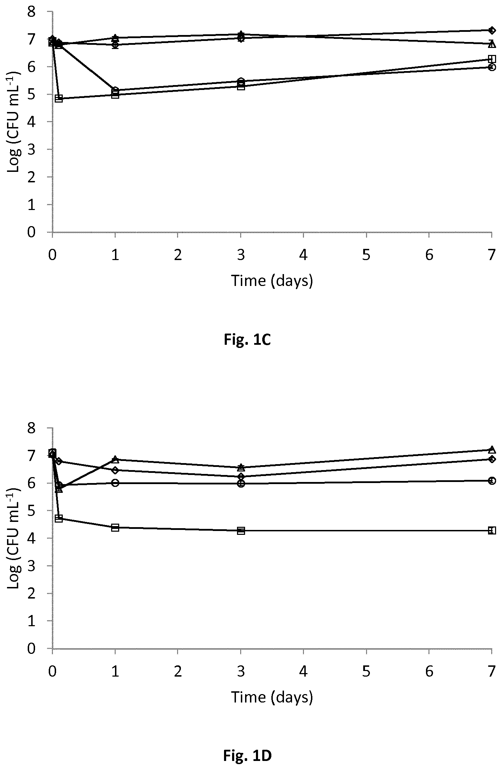

**Figure 1****.** Effect of HPP, phage P100, pediocin PA-1 and their combination on the viability of *L. monocytogenes* in UHT whole milk during refrigerated storage (4 °C). A) *L. monocytogenes* Scott A (CIP 103575 Pasteur Institute) (10⁷ CFU mL⁻¹) non-pressurized (0.1 MPa). **B**) *L. monocytogenes* Scott A (CIP 103575 Pasteur Institute) (10⁷ CFU mL⁻¹) pressurized (300 MPa, 5 min, 10°C). C) *L. monocytogenes* 1751 (10⁷ CFU mL⁻¹) non-pressurized (0.1 MPa). **D**) *L. monocytogenes* 1751 (10⁷ CFU mL⁻¹) pressurized (300 MPa, 5 min, 10°C). (◊) *L. monocytogenes* - control; (○) containing phage P100; (Δ) containing pediocin PA-1; (□) containing phage P100 and pediocin PA-1. Values are the average ± SD (error bars) of two independent experiments.

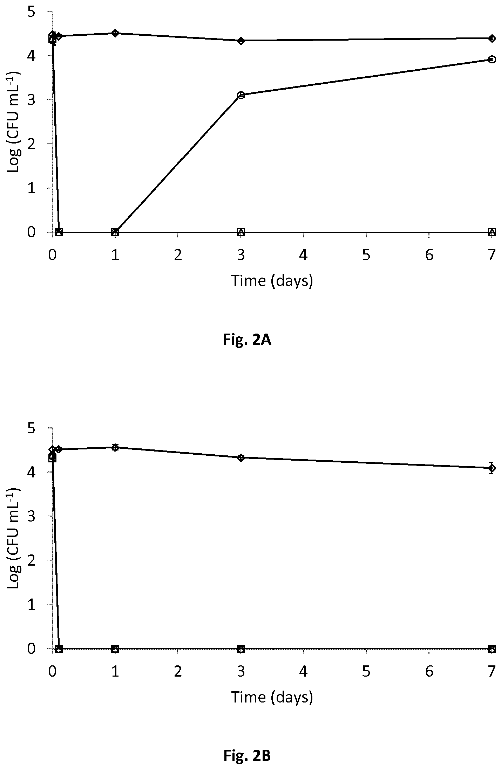

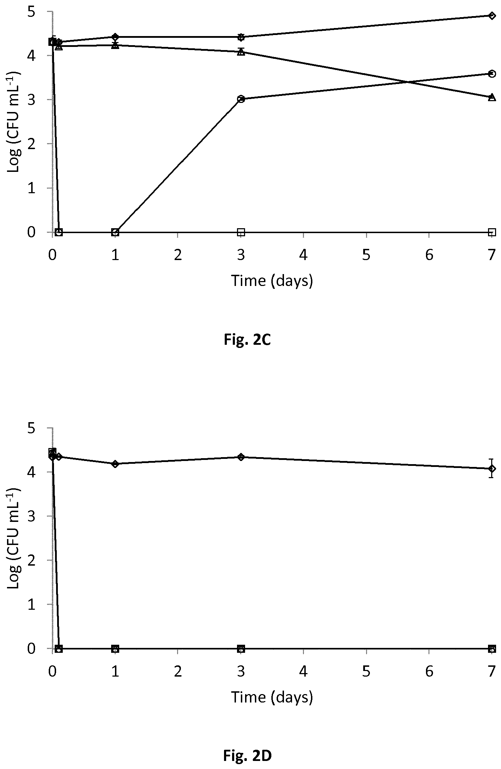

**Figure 2****.** Effect of HPP, phage P100, pediocin PA-1 and their combination on the viability of *L. monocytogenes* in UHT whole milk during refrigerated storage (4 °C). A) *L. monocytogenes* Scott A (CIP 103575 Pasteur Institute) (10⁴ CFU mL⁻¹) non-pressurized (0.1 MPa). **B**) *L. monocytogenes* Scott A (CIP 103575 Pasteur Institute) (10⁴ CFU mL⁻¹) pressurized (300 MPa, 5 min, 10°C). **C**) *L. monocytogenes* 1751 (10⁴ CFU mL⁻¹) non-pressurized (0.1 MPa). D) *L. monocytogenes* 1751 (10⁴ CFU mL⁻¹) pressurized (300 MPa, 5 min, 10°C). (◊) *L. monocytogenes* - control; (○) containing phage P100; (Δ) containing pediocin PA-1; (□) containing phage P100 and pediocin PA-1. Values are the average ± SD (error bars) of two independent experiments.

### Detailed Description

In an embodiment, the microorganisms used in the present disclosure are summarized in **Table 1.** All bacterial isolates are deposited in the *Listeria* Research Center of Escola Superior de Biotecnologia (LRCESB).

**Table 1. Microorganisms used in this disclosure**

| **Microorganisms** | **Source** | **Serovar** | **Culture collection** |
|---|---|---|---|
| **Bacteriocinogenic lactic acid bacteria** | | | |
| *Pediococcus acidilactici* | Portuguese fermented meat sausage | n/a | |
| ***Listeria* spp.** | | | |
| *Listeria innocua* 2030c | n/a | n/a | PHLS |
| *Listeria monocytogenes* 49594 "Scott A (CIP 103575 Pasteur Institute)" | clinical | IV b | ATCC |
| *L. monocytogenes* 19116 | chicken | IV c | ATCC |
| *L. monocytogenes* | cheese | IV b | |
| *L. monocytogenes* | Portuguese fermented meat sausage | IV b | |
| **Bacteriophage** | | | |
| Listex™P100 | wastewater | n/a | Micreos Food Safety |

| | | | |
|---|---|---|---|
| Legend: (PHLS) Public Health Laboratory Services (Colindale, UK); (ATCC) American Type Culture Collection | | | |

In an embodiment, *Listeria* spp. isolates were preserved at -20 °C in tryptic soy broth (Pronadisa, Madrid, Spain) supplemented with 0.6% (w/v) of yeast extract (Lab M, Lancashire, United Kingdom) (TSBYE) containing 30% (v/v) of glycerol (Sigma, Steinheim, Germany). For the preparation of the inocula, one single colony of each *L. monocytogenes* isolate was transferred from tryptic soy agar (Pronadisa) supplemented with 0.6% (w/v) of yeast extract (Lab M) (TSAYE) into 10 mL of TSBYE and incubated at 37 °C for 24 h. This culture was then subsequently diluted 1:100 in TSBYE and incubated in the same conditions. Cells were harvested by centrifugation (7000 x g for 10 min at 4 °C; Rotina 35R, Hettich, Germany), re-suspended in 10 mL of sterile ¼-strength Ringer's solution (R/4; Lab M) and homogenized to obtain an initial inoculum concentration of *ca*. 10⁹ colony forming units (cfu) mL⁻¹.

In an embodiment, *Pediococcus (P.) acidilactici* was preserved and cultured under the same conditions described above, except that the growth medium employed was de Man, Rogosa & Sharpe (MRS) broth and agar (Lab M).

In an embodiment, Phage Listex™ P100 stock solution (Micreos Food Safety, The Netherlands) was stored at 4° C in saline buffer and initial concentration was 10¹¹ PFU mL⁻¹. A working solution of phage (*ca*. 10¹⁰ PFU mL⁻¹) was freshly prepared on the day of the experiment by diluting the stock solution in phosphate buffered saline (PBS, 0.1 M, pH 7.4).

In an embodiment, the partial purification of pediocin PA-1 from *P. acidilactici* was performed according to Albano *et al.* (2007) with the following modification: after recovering the supernatant from the *P. acidilactici* cell, the precipitated extract was dialyzed overnight (4 °C) in ultra-pure water through a 1-kDa MW cut-off dialysis membrane, with two changes of water. The final extract was sterilized by filtration (0.22 µm, Millipore, Belford, MA, USA). Molecular weight estimation was assessed byTricine-SDS-PAGE as described by Schägger (2006), using a low molecular weight protein marker within the range of 6.5 to 270 kDa (Grisp, Porto, Portugal). The stock solution was stored at 4 °C in ammonium acetate buffer (pH 6.5) and antilisterial activity was further evaluated.

In an embodiment, the preparation of food matrices and inoculation was carried out as follows: "Alheira", a fermented meat sausage, and UHT whole milk were selected based in the prevalence of *L. monocytogenes* in these type of matrices (dairy and fermented meat); UHT whole milk was chosen as a model prospecting the practical application of the herein described approach, e.g. in decontamination of milk utilized in raw milk cheese production.

In an embodiment, fermented meat sausage paste was previously sterilized by autoclaving (121 °C, 15 min) before being inoculated, to avoid interferences and the variability of initial endogenous microbial flora on phage Listex™ P100. Two different strains were selected to perform separate trials/assays, *L. monocytogenes* Scott A (CIP 103575 Pasteur Institute), a well described strain in HHP and *L. monocytogenes* 1942, isolated from Portuguese fermented meat sausage (**Table 1**). The several fermented meat sausage pastes (*ca*. 100 g) were placed into sterile stomacher bags, and inoculated as described in detail in **Table 2.** Homogenisation was manually done by gently massaging the sample (ca. 3 min). The final phage Listex™ P100 had a MOI (multiplicity of infection, ratio of phage to bacteria) of 10000 in the inoculated samples. One set of samples was submitted to mild HHP (300 MPa, 5 min, 10 °C) while the other set was directly stored at atmospheric pressure (0.1 MPa) under refrigeration (4° C), to serve as a control (non-pressure treated). All experiments were performed in three independent replicates.

**Table 2. Formulations of combined hurdles used in "Alheira" fermented sausage (mL/100g)**

| Treatments | Final concentration | *L. monocytogenes* (6 log CFUmL⁻¹) | phage P100 (10 log PFU mL⁻¹) | Pediocin PA-1 (128000AUmL^{- 1}) | *P. ocidilactici* (9 log CFUmL^{- 1}) |
|---|---|---|---|---|---|
| L | *L.monocytogenes* (10⁴ CFU/g) | 1 mL | 0 | 0 | 0 |
| LP | *L.monocytogenes* (10⁴ CFU/g) + Phage (10⁸ PFU/g) | 1 mL | 3.0 mL | 0 | 0 |
| LB | *L.monocytogenes* (10⁴ CFU/g) + bac HA 6111-2 (1280 AU/g) | 1 mL | 0 | 1.0 mL | 0 |
| LL | *L.monocytogenes* (10⁴ CFU/g) + *P. ocidilacti* (10⁷ CFU/g) | 1 mL | 0 | 0 | 1.0 mL |
| LPB | *L.monocytogenes* (10⁴ CFU/g) + Phage (10⁸ PFU/g) + bac HA 6111-2 (1280 AU/g) | 1 mL | 3.0 mL | 1.0 mL | 0 |
| LPL | *L.monocytogenes* (10⁴ CFU/g) + Phage (10⁸ PFU/g) + *P. ocidilacti* (10⁷ CFU/g) | 1 mL | 3.0 mL | 0 | 1.0 mL |

| | | | | | |
|---|---|---|---|---|---|
| Legend: L - *L. monocytogenes* untreated control; LP - *L. monocytogenes* + phage P100; LB - *L. monocytogenes* + pediocin PA-1; LL - *L. monocytogenes* + *P.acidilactici;* LPB - *L. monocytogenes* + phage P100 +pediocin PA-1; LPL - *L. monocytogenes* + phage P100 + *P.acidilactici.* | | | | | |

In an embodiment, UHT whole milk was aseptically transferred from the commercial package to sterile glass flasks (250 mL), and inoculated as described in **Table** 3. Homogenisation was made by magnetic agitation to ensure a uniform distribution of the inoculum. Final phage Listex™ P100 had a MOI of 10000 and 10 to 10⁴ and 10⁷ log (CFU/mL) of *L. monocytogenes,* respectively, in the inoculated samples. One set of samples was subjected to mild HHP (300 MPa, 5 min, 10 °C) and other set directly stored at atmospheric pressure (0.1 MPa) under refrigeration (4 °C), to serve as control (non-pressure treated). Additionally, a third set was considered inoculated with *L. monocytogenes* cultures and submitted to a conventional heat treatment of milk high temperature short time pasteurization. The reason was to have a comparative standard during refrigerated storage at 4 °C. *L. monocytogenes* Scott A (CIP 103575 Pasteur Institute) and *L. monocytogenes* 1751 (isolated from cheese) were select to perform independent assays. All experiments were performed in three independent replicates.

**Table 3. Formulations of combined hurdles used in UHT whole milk (mL/100 mL)**

| Treatments | Final concentration | *L. monocytogenes* (6 log CFUmL⁻¹) | Treatments (9 log CFUmL⁻¹) | Final concentration (10 log CFU mL⁻¹) | *L. monocytogenes* (128000AUmL^{- 1}) |
|---|---|---|---|---|---|
| L1 | *L. monocytogen* es (10⁴ CFU/mL) | 1 mL | 0 | 0 | 0 |
| LP1 | *L. monocytogen es* (10⁴ CFU/mL) + Phage (10⁸ PFU/mL) | 1 mL | 0 | 3.0 mL | 0 |
| LB1 | *L.monocytoge nes* (10⁴ CFU/mL) + bac HA 6111-2 (1280 AU/mL) | 1 mL | 0 | 0 | 1.0 mL |
| LPB1 | *L. monocytogen es* (10⁴ CFU/mL) + Phage (10⁸ PFU/mL) + pediocin PA-1(1280 AU/mL) | 1 mL | 0 | 3.0 mL | 1.0 mL |
| L2 | *L. monocytogen es* (10⁷ CFU/mL) | 0 | 1 mL | 0 | 0 |
| LP2 | *L. monocytogen es* (10⁷ CFU/mL) + Phage (10⁸ PFU/mL) | 0 | 1 mL | 3.0 mL | 0 |
| LB2 | *L. monocytogen es* (10⁷ CFU/mL) + pediocin PA-1 (1280 AU/mL) | 0 | 1 mL | 0 | 1.0 mL |
| LPB2 | *L. monocytogen es* (10⁷ CFU/mL) + Phage (10⁸ PFU/mL) + pediocin PA-1(1280 AU/mL) | 0 | 1 mL | 3.0 mL | 1.0 mL |

| | | | | | |
|---|---|---|---|---|---|
| Legend: L - *L. monocytogenes* untreated control; LP - *L. monocytogenes* + phage P100; LB - *L. monocytogenes* + pediocin PA-1; LPB - *L. monocytogenes* + phage P100 +pediocin PA-1; 1 - (10⁶ CFU/mL) *L. monocytogenes inoculum;* 2 - (10⁹ CFU/mL) *L. monocytogenes* inoculum. | | | | | |

In an embodiment, the high hydrostatic pressure treatments were performed as follows. The liquid samples prepared as described above were transferred to HHP resistant polyethylene bottles (36-mL), previously sterilised, and double vacuum sealed in low permeability polyamide-polyethylene bags (PA/PE-90, Albipack - Packaging Solutions, Portugal). The solid samples were directly placed in PA/PE-90 bags and also double vacuum sealed. Samples were pressurized at 300 MPa (10 °C), for 5 min in a hydrostatic press from Avure Technologies (Model 215L-600; Erlanger, KY). All experiments were carried out in three independent replicates.

In an embodiment, the milk high temperature short time pasteurization simulation was carried out as follows. Milk samples inoculated exclusively with *L. monocytogenes* cultures were submitted to high temperature short time pasteurization (HTST) to have a comparative standard during refrigerated storage of *L. monocytogenes* artificially contaminated samples. Briefly, UHT whole milk was pre-warmed at 72 °C for 60 min to allow temperature equilibration and then cells were inoculated at the same concentration as described above, in particular as shown in **Table 3,** and exposed to this temperature for 25 s. Samples were cooled with water at room temperature before storage at 4 °C. Three independent replicates were performed for each isolate.

In an embodiment, the bacterial enumeration and phage Listex™ P100 and bacteriocin titration was carried out as follows. *L. monocytogenes* enumeration and detection procedure (enrichment protocol) were performed according to the ISO 11290-37 1:1996/Amd 1:2004 protocol using the media recommended by the method (ISO, 2004).

In an embodiment, *P. acidilactici* was serially diluted in sterile ¼ Ringer's solution (Lab M) and plated in duplicate for enumeration by the drop count technique on MRS agar and incubated at 37 °C for 48h.

In an embodiment, phage Listex™ P100 titre (PFU mL⁻¹) was determined by the double-layer method (plaque assay) as described previously by Kropinski et al. (2009) with modifications in the media and diluent. TSAYE was selected as solid media (underlay) and TSBYE, containing 7g L⁻¹ of bacteriological agar (Pronadisa, Madrid, Spain), was used as molten soft agar (overlay). The host strain used in the experiments was *L. monocytogenes* ATCC 19116 and the diluent chosen was PBS (0.1 M, pH 7.4). The detection limit of the technique was 10 PFU mL⁻¹.

In an embodiment, antilisterial activity of bacteriocin (pediocin PA-1) was measured by two-fold dilutions and the spot-on-the-lawn method described by van Reenen et al. (1998) and expressed in arbitrary unit (AU) mL-¹. One AU is defined as the reciprocal of the highest dilution showing a clear zone of growth inhibition of target bacteria. *L. monocytogenes* Scott A (CIP 103575 Pasteur Institute) and *L. innocua* 2030c were selected as target bacteria.

In an embodiment, due to the interference in the recovery of bacteriocin from complex food matrices (e.g. adsorption/ retention) the antilisterial activity of pediocin PA-1 was evaluated in ammonium acetate buffer (pH 6.5) and from extract recovered from food matrices during the refrigerated storage at 4 °C. At pre-set time intervals (0, 7, 14, 21, 28, 45 and 60 days) samples were subjected to titration protocol as described above . All experiments were conducted in three independent replicates.

In an embodiment, the phage Listex™ P100 ability to maintain its stability and viability during shelf-life storage (4 °C) after HHP treatment was assessed. At pre-set time intervals (0, 7, 14, 21, 28, 45 and 60 days), non- and pressure-treated samples were analysed.

In an embodiment, in order to understand the effect of HHP in the physiological state of biocontrol agents, electron microscopy for viral particles (phage Listex™ P100) and optical microscopy for bacterial (*P. acidilactici*) cells were performed. Samples of phage Listex™ P100 particles in saline buffer (Micreos Food Safety, The Netherlands) non- and pressure-treated at 0.1 and 300 MPa (5 min, 10 °C), respectively, were used. The suspension was deposited on copper grids with a carbon-coated Formvar carbon film on 200 square mesh nickel grid, stained with 2 % uranyl acetate (pH 4.0) and examined using a Jeol JEM 1400 transmission electron microscope (TEM). Non- and pressurized (300 MPa, 5 min, 10 °C) of *P. acidilactci* cells in ¼-strength Ringer's solution were subjected to gram staining and observed in the optical microscopy (CX23 microscope, Olympus Optical Co. Ldt, Japan).

In an embodiment, microbial and phage titration values were submitted to a logarithmic reduction using the equation: log (N/N0), where N is the microbial cell density/ phage titre at a particular sampling time and N0 is the initial cell density/ phage titre. The differences were analysed using the one-way analysis of variances (ANOVA) with Tukey's post hoc test (SPSS, Version 23.0, Inc., Chicago, IL) when homogeneity of variance was assumed. The data obtained from detection procedure was presented as presence or absence of *L. monocytogenes* and significant differences were determined using the chi-square test.

In an embodiment, the results of *L. monocytogenes* inactivation in fermented meat sausage are presented in **Table 4.** For both tested strains (Lm Scott A (CIP 103575 Pasteur Institute) and Lm 1942), all treatments achieved enumeration below the detection limit of the count technique, excluding the samples inoculated just with *L. monocytogenes* cells (pressurized and non-pressurized). All treatments including *P. acidilactici* or its semi purified bacteriocin showed to be able to reduce *L. monocytogenes* to undetectable levels by enrichment protocol during shelf life of fermented meat sausages at 4 °C. The combined effect of HHP and pediocin PA-1 reduced the *L. monocytogenes* initial load to undetectable levels immediately after the HHP treatment, whereas combination of HPP and *P. acidilactici* resulted in the absence of the pathogen 72h after the treatment.

In an embodiment of non-pressure treated samples inoculated with pediocin PA-1 or *P. acidilactici, L. monocytogenes* was not detected only at 14 and 21 days of refrigerated storage, respectively.

**Table 4. Recovery of L. monocytogenes in fermented meat sausage during refrigerated storage (4 °C).**

| | | Recovery of *Listeria monocytogenes* after enrichment protocol ISO 11290- 37 1:1996/Amd 1:2004 | | | | | | | | | | | | | | | | | |
|---|---|---|---|---|---|---|---|---|---|---|---|---|---|---|---|---|---|---|---|
| | | Sampling time | | | | | | | | | | | | | | | | | |
| | | AT | | 1 day | | 3 days | | 7 days | | 14 days | | 21 days | | 28 days | | 45 days | | 60 days | |
| Process condition | Antimicrobial agent | Lm Scott A (CIP 1035 75 Past eur Instit ute) | Lm 1942 | Lm Scott A (CIP 1035 75 Paste ur Instit ute) | Lm 1942 | Lm Scott A (CIP 1035 75 Paste ur Instit ute) | Lm 1942 | Lm Scott A (CIP 1035 75 Paste ur Instit ute) | Lm 1942 | Lm Scott A (CIP 1035 75 Past eur Instit ute) | Lm 1942 | Lm Scott A (CIP 1035 75 Past eur Instit ute) | Lm 1942 | Lm Scott A (CIP 1035 75 Past eur Instit ute) | Lm 1942 | Lm Scott A (CIP 1035 75 Past eur Instit ute) | Lm 1942 | Lm Scott A (CIP 1035 75 Past eur Instit ute) | Lm 1942 |
| 0.1 Mpa | Control | + | + | + | + | + | + | + | + | + | + | + | + | + | + | + | + | + | + |
| | Phage P100 | + | + | + | + | + | + | + | + | + | + | + | + | + | + | + | + | + | + |
| | *P. ocidilactici* | + | + | + | + | + | + | + | + | + | + | - | - | - | - | - | - | - | - |
| | Pediocin PA-1 | + | + | + | + | + | + | + | + | - | - | - | - | - | - | - | - | - | - |
| | Phage P100 + *P. ocidilactici* | + | + | + | + | + | + | + | + | + | + | - | - | - | - | - | - | - | - |
| | Phage P100 + Pediocin PA-1 | + | + | + | + | + | + | - | - | - | - | - | - | - | - | - | - | - | - |
| 300 Mpa | Control | + | + | + | + | + | + | + | + | + | + | + | + | + | + | + | + | + | + |
| | Phage P100 | + | + | + | + | + | + | + | + | + | + | + | + | + | + | + | + | + | + |
| | *P. acidilactici* | + | + | + | + | - | - | - | - | - | - | - | - | - | - | - | - | - | - |
| | *Pediocin* PA-1 | | - | - | - | - | - | - | - | - | - | - | - | - | - | - | - | - | - |
| | Phage P100 + *P. acidilactici* | - | - | - | - | - | - | - | - | - | - | - | - | - | - | - | - | - | - |
| | Phage P100 + pediocin PA-1 | - | - | - | - | - | - | - | - | - | - | - | - | - | - | - | - | - | - |

| | | | | | | | | | | | | | | | | | | | |
|---|---|---|---|---|---|---|---|---|---|---|---|---|---|---|---|---|---|---|---|
| Legend: Lm - *L. monocytogenes;* AT - 2 hours after treatment; (+) presence of *L. monocytogenes;* (-) absence of *L. monocytogenes;* (*) 10⁴ CFU mL⁻¹ of *L. monocytogenes;* (**) 10⁷ CFU mL⁻¹ of *L. monocytogenes.* | | | | | | | | | | | | | | | | | | | |

In an embodiment, for both pressurized and non-pressurized samples, treatments containing phage P100 and just inoculated with *L. monocytogenes* were unable to reduce the samples to absence level over the 60 days of storage.

In an embodiment, and to obtain even better results, the most effective treatment was the combined effect between HHP, phage P100 and pediocin PA-1 (semi-purified extract and *in situ* production); this treatment reached the absence of *L. monocytogenes* by the enrichment protocol immediately after pressurization.

In an embodiment, the inactivation of *L. monocytogenes* in UHT whole milk was carried out as follows. The logarithmic reductions of *L. monocytogenes* in UHT whole milk with different synergistic treatments are presented in **Figure 1**. At high levels of contamination (10⁷ CFU mL⁻¹), the pressurized UHT milk samples presented an initial logarithmic reduction (ranged from 1.13 to 3.21 cycles log) followed by a bacteriostatic effect up to the seven days of refrigerated storage at 4 °C; non-pressurized samples treated with phage P100 or pediocin PA-1 have a decrease until day 1 followed by a regrowth in 83% of the samples during shelf life. For both studied strains (Lm Scott A (CIP 103575 Pasteur Institute) and Lm 1751), the most effective treatment was the combined effect of HHP, phage P100 and pediocin PA-1. Strain Scott A (CIP 103575 Pasteur Institute) was slightly more susceptible to pediocin PA-1, resulting in no regrowth during storage for both pressurized and non-pressurized samples.

In an embodiment, results from samples inoculated with (10⁴ CFU mL⁻¹) are presented in **Table 5** and **Figure 2**. For both strains and also for non- and pressure-treated samples, the synergism between phage P100 and pediocin PA-1 resulted in enumerations below the detection limit of the count technique after inoculation; *L. monocytogenes* were undetectable in samples pressurized at 300 MPa for 5 min whereas still positive in non-pressure treated samples (0.1 MPa) up to the seven days of refrigerated storage. Once more, the combined effect of these three hurdles (HHP, phage P100 and pediocin PA-1) proved to be the most effective treatment in the *L. monocytogenes* inactivation in UHT whole milk. *L. monocytogenes* regrowth were observed in non- pressurized samples treated with phage P100 for both strains; synergistic application of phage P100 and HHP resulted in no regrowth and absence of *L. monocytogenes* during all refrigerated shelf life. Combined treatment between HHP and pediocin PA-1 demonstrated to be useful to control strain Scott A (CIP 103575 Pasteur Institute) in UHT whole milk, whereas strain Lm 1751 were more resistant to the bacteriocin; at atmospheric pressure the pediocin PA-1 was able to reduce *L. monocytogenes* to bellow the detection limit of count technique in Scott A (CIP 103575 Pasteur Institute) experiment, whereas in strain Lm 1751 it was only possible with the conjugation of HHP (300 MPa. 5min).

In an embodiment, overall, the samples treated with the HTST pasteurization had similar results to the synergistic effect of HHP (300 MPa, 5 min), phage P100 and pediocin PA-1 in the recovery of *Listeria monocytogenes* after enrichment protocol ISO 11290 (**Table 5**). It proves to be a useful and minimal process able to decontaminated *L. monocytogenes* in a dairy matrix at refrigerated temperatures.

**Table 5. Recovery of L. monocytogenes in UHT whole milk during refrigerated storage 4 °C.**

| | | Recovery of *Listeria monocytogenes* after enrichment protocol ISO 11290-37 1:1996/Amd 1:2004 | | | | | | | |
|---|---|---|---|---|---|---|---|---|---|
| | | Sampling time | | | | | | | |
| | | AT | | 1 day | | 3 days | | 7 days | |
| Process condition | Antimicrobial agent | Lm Scott A (CIP 103575 Pasteur Institute) | Lm 1751 | Lm Scott A (CIP 103575 Pasteur Institute) | Lm 1751 | Lm Scott A (CIP 103575 Pasteur Institute) | Lm 1751 | Lm Scott A (CIP 103575 Pasteur Institute) | Lm 1751 |
| 0.1 MPa (control) | Control* | + | + | + | + | + | + | + | + |
| | Phage P100* | + | + | + | + | + | + | + | + |
| | Pediocin PA-1 | - | + | - | + | - | + | + | + |
| | Phage P100 + Pediocin PA-1 | + | + | + | + | + | + | + | + |
| 300 MPa HHP | Control* | + | + | + | + | + | + | + | + |
| | Phage P100* | - | - | - | - | - | - | - | - |
| | Pediocin PA-1 | - | + | - | + | - | + | - | + |
| | Phage P100 + Pediocin PA-1 | - | - | - | - | - | - | - | - |
| HTST pasteurization | Control* | - | - | - | - | - | - | - | - |
| | Control** | - | - | - | - | - | - | - | - |

| | | | | | | | | | |
|---|---|---|---|---|---|---|---|---|---|
| Legend: Lm - *L. monocytogenes;* AT - 2 hours after treatment; (+) presence of *L. monocytogenes;* (-) absence of *L. monocytogenes;* (*) 10⁴ CFU mL⁻¹ of *L. monocytogenes;* (**) 10⁷ CFU mL⁻¹ of *L. monocytogenes.* | | | | | | | | | |

In an embodiment, the stability of biocontrol agents during HHP and refrigerated storage at 4 °C. To evaluate the stability of antimicrobial agents after HHP treatment during the shelf-life of pressure treated food products, non- and pressure-treated samples of UHT whole milk and fermented meat sausage were stored at 4 °C for 60 days, and phage titres, viable cells counts and bacteriocin titers evaluated at specific time periods; results obtained are presented in **Tables 4** and **5**.

In an embodiment, all antimicrobials agents tested in this study were stable during refrigerated storage at 4 °C. For pressurized samples of fermented meat sausage containing phage P100 and *P. acidilactici,* lower phage's titer^{was} observed during shelf life of sausage, probably promoted by the acidification caused by the lactic acid bacteria combined to the pressure stress previously applied.

In an embodiment, the synergistic effect between applied hurdles has proven to be an efficient system to achieve the microbial inactivation of *L. monocytogenes* in non-thermal food processing.

In an embodiment, it was demonstrated that at medium contamination levels (i.e. 10⁴ UFC/ g or mL) both food matrices used in this study were able to be completely decontaminated after pressurization by some of the synergistic treatments; at high contaminated level (i.e. 10⁷ UFC/ g or mL) samples, the synergism between HHP, phage and bacteriocin demonstrated an initial reduction followed by bacteriostatic effected during the storage up to seven days.

In an embodiment, according to *L. monocytogenes* cell enumeration the synergistic effect between the following hurdles: (i) phage + mild HPP; (ii) phage + bacteriocin; (iii) bacteriocin + mild HPP; (iv) phage + bacteriocin + mild HPP has been proved immediately after treatments. Consistence in microbial inactivation during refrigerated storage was demonstrated with the combination of phage + bacteriocin + mild HPP, which promoted no regrowth during storage in both tested matrices.

In an embodiment, the combined effect of the three hurdles (phage, bacteriocin and mild HHP) has proven to be the best treatment to decontaminate *L. monocytogenes* in non-thermal conditions (T = ≤ 10) especially according the food safety during refrigerated shelf life. Results from the multi-hurdle approach in decontamination of milk samples demonstrated cultural undetectable *L. monocytogenes* cells detection during all refrigerated storage (4 °C), been comparable to the results obtained from HTST pasteurization. As an innovative combined application of biocontrol agents (bactericidal and bacteriostatic effects) and a mild HHP (300 MPa, stressor condition), this system assures a minimal food processing option, whereas offering freshness and an eco-friendly and energetic sustainable process. Furthermore, the presence of bioactive agents targeting *L. monocytogenes* during the refrigerated shelf life of fermented meat sausage and milk has prevented the regrowth of injured cells; the combined presence of two different agents has proven to be a main barrier in the regrowth challenge of *L. monocytogenes,* by it means two different mechanisms assurance the biocontrol system.

The term "comprising" whenever used in this document is intended to indicate the presence of stated features, steps, but not to preclude the presence or addition of one or more other features, steps, or groups thereof.

The disclosure should not be seen in any way restricted to the embodiments described and a person with ordinary skill in the art will foresee many possibilities to modifications thereof.

The above described embodiments are combinable.

### References

Ahmadi, H., Anany, H., Walkling-Ribeiro, M., Griffiths, M.W., 2015. Biocontrol of Shigella flexneri in Ground Beef and Vibrio cholerae in Seafood with Bacteriophage-Assisted High Hydrostatic Pressure (HHP) Treatment. Food BioprocessTechnol. 8, 1160-1167. doi:10.1007/s11947-015-1471-6
Albano, H., Todorov, S.D., van Reenen, C.A., Hogg, T., Dicks, L.M.T., Teixeira, P., 2007. Characterization of two bacteriocins produced by Pediococcus acidilactici isolated from "Alheira", a fermented sausage traditionally produced in Portugal. Int. J. Food Microbiol. 116, 239-247. doi:10.1016/j.ijfoodmicro.2007.01.011
Baños, A., García-López, J.D., Núñez, C., Martínez-Bueno, M., Maqueda, M., Valdivia, E., 2016. Biocontrol of Listeria monocytogenes in fish by enterocin AS-48 and Listeria lytic bacteriophage P100. LWT - Food Sci. Technol. 66, 672-677. doi :10.1016/j .lwt.2015.11.025
Hygreeva, D., Pandey, M.C., 2016. Novel approaches in improving the quality and safety aspects of processed meat products through high pressure processing technology - A review. Trends Food Sci. Technol. 54, 175-185 doi:10.1016/j.tifs.2016.06.002.
ISO, (International Organization for Standardization) 2004. Microbiology of food and animal feeding stuffs-horizontal method for the detection and enumeration of Listeria monocytogenes. Part 1: Detection method. Part 2: Enumeration method. ISO standard 11290-1:1998 and Amd.1:2004. ISO, Geneva.
Kropinski, A. M., Mazzocco, A., Waddell, T. E., Lingohr, E., and Johnson, R. P. (2009). Enumeration of bacteriophages by double agar overlay plaque assay. Methods Mol. Biol. 501, 69-76.
Leistner, L., Gorris, L.G.M., 1995. Food preservation by hurdle technology. Trends Food Sci. Technol. 6, 41-46. doi:10.1016/S0924-2244(00)88941-4
Leistner, L., 2000. Basic aspects of food preservation by hurdle technology. Int. J. Food Microbiol. 55, 181-186. doi:10.1016/S0168-1605(00)00161-6
Leverentz, B., Conway, W.S., Camp, M.J., Janisiewicz, W.J., Abuladze, T., Yang, M., Saftner, R., Sulakvelidze, A., 2003. Biocontrol of Listeria monocytogenes on Fresh-Cut Produce by Treatment with Lytic Bacteriophages and a Bacteriocin. Appl. Environ. Microbiol. 69, 4519-4526. doi:10.1128/AEM.69.8.4519-4526.2003

## Claims

1. Method for processing a food product for inactivating bacteria associated to said product, comprising the steps of:
mixing the food product with a bacteriophage and a bacteriocin to obtain a mixed food product;
subjecting the mixed food product to a pressure of 100 - 300 MPa;
wherein the method is carried out with a temperature of operation varying between 5 - 20 °C; for a period of time from 1-20 minutes;
wherein the bacteriocin is pediocin PA-1;
wherein the bacteriophage is Listeria-specific phage P100.

2. Method according to the previous claim, wherein the method is carried out with a temperature of operation varying between 5 -10 °C.

3. Method according to any of the previous claims, wherein the step of mixing the food product is carried out by spraying, sprinkling, dipping, bathing, rinsing, injecting, or mixing, with a solution comprising a bacteriophage and a bacteriocin solution onto the food product.

4. Method according to any of the previous claims, wherein the concentration of bacteriocin ranges from 640 - 6400 AU/mL or from 640 - 6400 AU/g of food product.

5. Method according to any of the previous claims, wherein the concentration of bacteriophage ranges from 10⁸ - 10¹⁰ PFU/mL or 10⁸ - 10¹⁰ PFU/g of food product.

6. Method according to any of the previous claims, wherein the ratio of bacteriophage:bacteriocin is 10⁸ PFU:640 AU - 10¹⁰:6400 AU in 1 g of food product or 10⁸ PFU:640 AU - 10¹⁰:6400 AU in 1 mL of food product.

7. Method according to any one of the previous claims, wherein the inactivated microorganisms are bacteria selected from the genus: Listeria.

8. Method according to any one of the previous claims, wherein the bacteria is selected from species: *Listeria (L.) monocytogenes, L. innocua* or combinations thereof.

9. Method according to any of the previous claims, wherein the food product is selected from the following list: dairy product, meat product, poultry, fish product, seafood, a ready-to-eat meal, fruit derived product, vegetable derived product, grains, grain derived product, deli salad, salad dressing, condiment, pasta, soup, aseptically packaged food, or combinations thereof, in particular wherein the food product has a pH ≥ 4.00.

10. Method according to the previous claim, wherein the method is carried out for:
a period of time from 2-10 minutes, more preferably 5-8 minutes;
the pressure is 200-300 MPa, preferably 260-295 MPa, more preferably 280-285, even more preferably 300 MPa;
at a temperature of 10 °C.

11. Use of a composition having a bacteriophage and a bacteriocin, in food pasteurization, as a growth inhibitor of bacteria or as an inactivator of bacteria, wherein the composition is mixed with a food product, the mixed food product is subjected to a pressure of 100-300 MPa, at a temperature of operation varying between 5 - 20°C; for a period of time from 1 - 20 minutes; wherein the bacteriocin is pediocin PA-1; wherein the bacteriophage is a Listeria-specific bacteriophage, in particular *Listeria-specific* phage P100.

## Patentansprüche

1. Verfahren zur Behandlung eines Nahrungsmittelprodukts zur Inaktivierung von mit dem genannten Produkt verbundenen Bakterien, umfassend die Schritte:
mischen des Nahrungsmittelprodukts mit einem Bakteriophagen und einem Bakteriocin, um ein gemischtes Nahrungsmittelprodukt zu erhalten;
unter Druck setzen des gemischten Nahrungsmittelprodukts mit 100 - 300 MPa;
wobei das Verfahren mit einer Verfahrenstemperatur zwischen 5 - 20 °C für eine Zeitdauer von 1 - 20 Minuten durchgeführt wird;
wobei das Bakteriocin Pediocin PA-1 ist;
wobei der Bakteriophage ein Listeria-spezifischer Phage P100 ist.

2. Verfahren nach dem vorangehenden Anspruch, wobei das Verfahren bei einer Verfahrenstemperatur zwischen 5 -10 °C erfolgt.

3. Verfahren nach einem der vorangehenden Ansprüche, wobei der Schritt des Mischens des Nahrungsmittelprodukts durch Besprühen, Besprenkeln, Eintauchen, Baden, Spülen, Injizieren oder Mischen des Nahrungsmittelprodukts mit einer Lösung, die einen Bakteriophagen und eine Bakteriocin-Lösung umfasst, erfolgt.

4. Verfahren nach einem der vorangehenden Ansprüche, wobei die Konzentration des Bakteriocins zwischen 640 - 6400 a.u./ml oder 640 - 6400 a.u./g des Nahrungsmittelprodukts liegt.

5. Verfahren nach einem der vorangehenden Ansprüche, wobei die Konzentration des Bakteriophagen zwischen 10⁸ - 10¹⁰ PBE/ml oder 10⁸ - 10¹⁰ PBE/g des Nahrungsmittelprodukts liegt.

6. Verfahren nach einer der vorangehenden Ansprüche, wobei das Verhältnis Bakteriophage:Bakteriocin 10⁸ PBE:640 a.u. - 10¹⁰:6400 a.u. je 1 g Nahrungsmittelprodukt oder 10⁸ PBE:640 a.u. - 10¹⁰:6400 a.u. je 1 ml Nahrungsmittelprodukt beträgt.

7. Verfahren nach einem der vorangehenden Ansprüche, wobei die inaktivierten Mikroorganismen Bakterien sind, ausgewählt aus der Gattung: Listeria.

8. Verfahren nach einem der vorangehenden Ansprüche, wobei das Bakterium aus folgender Spezies ausgewählt wird: *Listeria (L.) monocytogenes, L. innocua* oder Kombinationen davon.

9. Verfahren nach einem der vorangehenden Ansprüche, wobei das Nahrungsmittelprodukt aus folgender Liste ausgewählt wird: Milchprodukt, Fleischprodukt, Geflügel, Fischprodukt, Meeresfrüchte, ein Fertiggericht, ein aus Obst erzeugtes Produkt, ein aus Gemüse erzeugtes Produkt, Getreide, ein aus Getreide erzeugtes Produkt, Fertigsalat, Salatdressing, Gewürz, Teigware, Suppe, aseptisch verpacktes Nahrungsmittel oder Kombinationen davon, wobei das Nahrungsmittelprodukt insbesondere einen pH ≥ 4,00 hat.

10. Verfahren nach einem der vorangehenden Ansprüche, wobei das Verfahren durchgeführt wird:
für eine Zeitdauer von 2-10 Minuten, bevorzugt 5-8 Minuten;
bei einem Druck von 200-300 MPa, bevorzugt 260-295 MPa, besonders bevorzugt 280-285, noch bevorzugter 300 MPa; bei einer Temperatur von 10 °C.

11. Verwendung einer Zusammensetzung mit einem Bakteriophagen und einem Bakteriocin bei der Nahrungsmittelpasteurisierung als Wachstumsinhibitor von Bakterien oder als Inaktivator von Bakterien, wobei die Zusammensetzung mit einem Nahrungsmittelprodukt gemischt wird und das gemischte Nahrungsmittelprodukt einem Druck von 100-300 MPa bei einer zwischen 5-20°C variierenden Verfahrenstemperatur für eine Zeitspanne von 1-20 Minuten ausgesetzt wird;
wobei das Bakteriocin Pediocin PA-1 ist; wobei der Bakteriophage ein *Listeria*-spezifischer Bakteriophage ist, insbesondere der *Listeria*-spezifische Phage P100.

## Revendications

1. Procédé pour traiter un produit alimentaire pour inactiver les bactéries associées audit produit, comprenant les étapes de :
mélanger le produit alimentaire avec un bactériophage et une bactériocine pour obtenir un produit alimentaire mélangé ;
soumettre le produit alimentaire mélangé à une pression de 100 - 300 MPa ;
dans lequel le procédé est exécuté avec une température d'opération variant entre 5 - 20 °C ; pour une période de temps de 1-20 minutes ;
dans lequel la bactériocine est la pédiocine PA-1 ;
dans lequel le bactériophage est le phage spécifique aux *Listeria* P100.

2. Procédé selon la revendication précédente, dans lequel le procédé est exécuté avec une température d'opération variant entre 5-10 °C.

3. Procédé selon l'une quelconque des revendications précédentes, dans lequel l'étape de mélange du produit alimentaire est exécutée par pulvérisation, aspersion, trempage, bain, rinçage, injection, ou mélange, avec une solution comprenant un bactériophage et une solution de bactériocine dans le produit alimentaire.

4. Procédé selon l'une quelconque des revendications précédentes, dans lequel la concentration de bactériocine varie de 640 - 6400 UA/mL ou entre 640 - 6400 UA/g du produit alimentaire.

5. Procédé selon l'une quelconque des revendications précédentes, dans lequel la concentration de bactériophage varie de 10⁸ - 10¹⁰ UFP/mL ou 10⁸ - 10¹⁰ UFP/g du produit alimentaire.

6. Procédé selon l'une quelconque des revendications précédentes, dans lequel le ratio de bactériophage : bactériocine est 10⁸ UFP : 640 UA - 10¹⁰ : 6400 UA dans 1g du produit alimentaire ou 10⁸ UFP : 640 UA - 10¹⁰ : 6400 UA dans 1 mL du produit alimentaire.

7. Procédé selon l'une quelconque des revendications précédentes, dans lequel les micro-organismes inactivés sont des bactéries sélectionnées à partir du genre : Listeria.

8. Procédé selon l'une quelconque des revendications précédentes, dans lequel la bactérie est sélectionnée à partir des espèces : *Listeria (L.) monocytogenes, L. innocua* ou combinaisons de celles-ci.

9. Procédé selon l'une quelconque des revendications précédentes, dans lequel le produit alimentaire est sélectionné à partir de la liste suivante : produit laitier, produit de viande, volaille, produit de poisson, fruits de mer, repas tout prêts, produit dérivé de fruit, produit dérivé de légume, céréales, produit dérivé de céréal, salade prête à consommer, sauce de salade, condiment, pâtes, soupe, nourriture emballée aseptiquement, ou combinaisons de ceux-ci, en particulier dans lequel le produit alimentaire a un pH ≥ 4,00.

10. Procédé selon la revendication précédente, dans lequel le procédé est exécuté pour :
une période de temps de 2-10 minutes, plus préférablement 5-8 minutes ;
la pression est: 200-300 MPa, de préférence 260-295 MPa, plus préférablement 280-285, encore plus préférablement 300 MPa; à une température de 10 °C.

11. Utilisation d'une composition ayant un bactériophage et une bactériocine, en pasteurisation alimentaire, en tant qu'inhibiteur de croissance de bactéries ou en tant qu'inactiveur de bactéries, dans laquelle la composition est mélangée avec un produit alimentaire, le produit alimentaire mélangé est soumis à une pression de 100-300 MPa, à une température d'opération variant entre 5 - 20 °C ; pour une période de temps de 1 - 20 minutes ;
dans laquelle la bactériocine est de la pédiocine PA-1; dans laquelle le bactériophage est un bactériophage spécifique aux *Listeria,* en particulier un phage spécifique aux *Listeria* P100.
